(19) Europäisches Patentamt
European Patent Office
Office européen des brevets

(11) EP 1 362 870 A1

(12) DEMANDE DE BREVET EUROPEEN

(43) Date de publication:
**19.11.2003 Bulletin 2003/47**

(51) Int Cl.[7]: **C08F 255/02**, C09J 151/06, B32B 27/30

(21) Numéro de dépôt: **03290756.0**

(22) Date de dépôt: **26.03.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **16.05.2002 FR 0206019**

(71) Demandeur: **Atofina**
**92800 Puteaux (FR)**

(72) Inventeurs:
- **Baumert, Martin**
  **27470 Serquigny (FR)**
- **Severac, Romain Résidence Ile Bleue**
  **34790 Grabels (FR)**

(74) Mandataire: **Neel, Henry et al**
**Atofina,**
**DRDC/DPI,**
**4-8, Cours Michelet,**
**La Défense 10**
**92091 Paris La Défense Cedex (FR)**

# (54) Structure multicouche comprenant un liant à base de polyoléfine greffée par un monomère acrylique

(57) La présente invention concerne une structure multicouche comprenant :

- une couche de liant à base d'un polymère greffé résultant de la polymérisation d'au moins un (meth) acrylate d'alkyle en présence d'une polyoléfine et directement attachée à celle ci,
- une couche d'un polymère choisi parmi les polyoléfines, les polymères acryliques et les polymères fluorés.

La polymérisation du (meth)acrylate d'alkyle en présence de la polyoléfine peut être effectuée dans une extrudeuse dans laquelle la polyoléfine est à l'état fondu. On ajoute aussi un initiateur radicalaire tel qu'un peroxyde.

L'épaisseur de cette structure peut être de l'ordre de 100 µm jusqu'à plusieurs mm ou cm.

La présente invention concerne aussi une structure comprenant dans cet ordre :

- une couche d'un polymère choisi parmi les polyoléfines, les polymères acryliques et les polymères fluorés,
- une couche du liant précité et
- une couche d'un polymère choisi parmi les polyoléfines, les polymères acryliques et les polymères fluorés,
- les couches adhérant entre elles.

Des structures préférées sont celles dans lesquelles les couches de chaque coté du liant sont différentes.

La présente invention concerne aussi une structure comprenant dans cet ordre :

- une couche d'un polymère choisi parmi les polyoléfines, les polymères acryliques et les polymères fluorés,
- une couche du liant précité,
- une couche d'un polymère choisi parmi les polyoléfines, les polymères acryliques et les polymères fluorés,
- une couche du liant précité,
- une couche d'un polymère choisi parmi les polyoléfines, les polymères acryliques et les polymères fluorés,
- les couches adhérant entre elles.

Des structures préférées sont celles dans lesquelles la couche centrale est différente des couches extrêmes, ces couches extrêmes pouvant être identiques ou différentes.

La présente invention concerne aussi des dispositifs de transfert ou de stockage de fluides et plus particulièrement des tuyaux, des réservoirs, des goulottes, des bouteilles et des conteneurs constitués des structures ci dessus.

EP 1 362 870 A1

## Description

### [*Domaine de l'invention*]

La présente invention concerne une structure multicouche comprenant un liant à base de polyoléfine greffée par un monomère acrylique. Plus précisément la structure de l'invention comprend une couche du liant précité et directement attachée à celle ci une couche d'un polymère choisi parmi les polyoléfines, les polymères acryliques et les polymères fluorés. L'épaisseur de cette structure peut être de l'ordre de 100 µm jusqu'à plusieurs mm ou cm.

Par exemple une structure comprenant une couche de liant et une couche de polymère fluoré est utile pour recouvrir un substrat en polyoléfine. Il suffit d'injecter le substrat à l'état fondu sur la structure multicouche disposée dans le fond d'un moule d'injection, la couche de polymère fluoré étant disposée contre la paroi du moule.

La présente invention concerne aussi une structure comprenant dans cet ordre une couche d'un polymère choisi parmi les polyoléfines, les polymères acryliques et les polymères fluorés, une couche du liant précité et une couche d'un polymère choisi parmi les polyoléfines, les polymères acryliques et les polymères fluorés. Par exemple une structure comprenant dans cet ordre une couche de polyoléfine, une couche du liant et une couche de polymère fluoré (par exemple le PVDF) peut être un tuyau dont la couche intérieure est en PVDF. La couche de PVDF permet au tuyau de polyoléfine d'être résistant et barrière à de nombreux fluides. Cette structure peut être aussi un réservoir en polyoléfine ayant une couche intérieure en PVDF, il est utile comme réservoir d'essence pour les automobiles.

L'invention concerne aussi des structures comprenant une couche centrale soit de polyoléfine, soit de polymère acrylique soit de polymère fluoré et de chaque coté une couche de liant et une autre couche d'un polymère choisi parmi les polyoléfines, les polymères acryliques et les polymères fluorés.

### [*L'art antérieur et le problème technique*]

La demande de brevet WO 0220644 décrit des structures comprenant dans cet ordre une couche de polypropylène, un liant constitué d'un tronc en polypropylène sur lequel sont attachés des greffons en PMMA et une couche en PVDF. Pour fabriquer le liant on greffe de l'anhydride maléique sur un tronc en polypropylene puis on fait réagir ce tronc portant l'anhydride maléique avec un copolymère du MMA (méthacrylate de méthyle) et du HEMA (méthacrylate d'hydroxyéthyle). La réaction de l'anhydride maleique et du HEMA permet la fixation du greffon PMMA. Cette réaction n'est pas facile à effectuer, de plus le copolymère MMA-HEMA aussi est dificile à fabriquer.

La demande de brevet JP 08336937 A publiée le 24 décembre 1996 décrit des structures semblables à celles de l'art antérieur précédent mais le liant est un copolymère greffé obtenu par polymérisation en solution d'un mélange de MMA, d'acrylonitrile et de styrène en présence d'un élastomère choisi parmi les SB (copolymères à blocs polystyrène et blocs polybutadiène) hydrogènés, les polybutadiènes hydrogènés et les EPR (abréviation de Éthylène Propylène Rubber). Ces polymères greffés n'ont rien à voir avec le liant constitué d'un tronc en polypropylène sur lequel sont attachés des greffons en PMMA et qui est décrit dans l'art antérieur précédent WO 0220644. Le liant est beaucoup plus simple à fabriquer que celui de l'art antérieur précédent mais ces structures ont des propriétés insuffisantes en particulier en présence d'essence. En effet dans un réservoir ayant respectivement une couche extérieure en polyoléfine, une couche de liant et une couche intérieure en PVDF et bien que le PVDF soit une très bonne barrière il y a cependant de très faibles quantités d'essence qui traversent la couche de PVDF et vont dans le liant.

On a maintenant trouvé un liant pour faire adhérer une couche de polyoléfine et une couche de PVDF, le dit liant est un polymère greffé obtenu par polymérisation de MMA en présence de VLDPE (abréviation de Very Low Density Polyéthylène ou polyéthylène de très basse densité) ou de copolymère éthylène-(meth)acrylate d'alkyle. Cette polymérisation peut se faire en extrudeuse sans solvant.

L'art antérieur a déjà décrit des produits très proches mais jamais dans des structures multicouches.

EP 33220 décrit des polymères greffés obtenus par polymérisation en extrudeuse du MMA en présence d'un polymère choisi parmi les EPR, les mélanges d'EPR et de LDPE (abréviation de Low Density Polyéthylène ou polyéthylène de basse densité), les EVA (copolymère éthylène -acétate de vinyle) et les mélanges EPR-EVA. Ces polymères greffés sont utilisés comme modifiants choc dans le PVC.

US 4476283 décrit des polymères greffés obtenus par polymérisation en extrudeuse du MMA, de styrène ou d'acrylonitrile en présence d'un mélange EPDM (copolymère éthylène-propylène-diène)-EPR. Ces polymères greffés sont utilisés en mélange avec des EPDM, des SBR (abréviation de Styrène Butadiène Rubber ou caoutchouc styrène butadiène) ou des NBR (abréviation de Nitrile Butadiène Rubber ou caoutchouc nitrile butadiène).

### [*Brève description de l'invention*]

La présente invention concerne une structure multicouche comprenant :

- une couche de liant à base d'un polymère greffé résultant de la polymérisation d'au moins un (meth)acrylate d'alkyle en présence d'une polyoléfine et directement attachée à celle ci,
- une couche d'un polymère choisi parmi les polyoléfines, les polymères acryliques et les polymères fluorés.

La polymérisation du (meth)acrylate d'alkyle en présence de la polyoléfine peut être effectuée dans une extrudeuse dans laquelle la polyoléfine est à l'état fondu. On ajoute aussi un initiateur radicalaire tel qu'un peroxyde.
L'épaisseur de cette structure peut être de l'ordre de 100 µm jusqu'à plusieurs mm ou cm.
La présente invention concerne aussi une structure comprenant dans cet ordre :

- une couche d'un polymère choisi parmi les polyoléfines, les polymères acryliques et les polymères fluorés,
- une couche du liant précité et
- une couche d'un polymère choisi parmi les polyoléfines, les polymères acryliques et les polymères fluorés,
- les couches adhérant entre elles.

Des structures préférées sont celles dans lesquelles les couches de chaque coté du liant sont différentes.
La présente invention concerne aussi une structure comprenant dans cet ordre :

- une couche d'un polymère choisi parmi les polyoléfines, les polymères acryliques et les polymères fluorés,
- une couche du liant précité,
- une couche d'un polymère choisi parmi les polyoléfines, les polymères acryliques et les polymères fluorés,
- une couche du liant précité,
- une couche d'un polymère choisi parmi les polyoléfines, les polymères acryliques et les polymères fluorés,
- les couches adhérant entre elles.

Des structures préférées sont celles dans lesquelles la couche centrale est différente des couches extrêmes, ces couches extrêmes pouvant être identiques ou différentes.
La présente invention concerne aussi des dispositifs de transfert ou de stockage de fluides et plus particulièrement des tuyaux, des réservoirs, des goulottes, des bouteilles et des conteneurs constitués des structures ci dessus.

**[*Description détaillée de l'invention*]**

**S'agissant du liant et d'abord du (méth)acrylate d'alkyle.** Des (méth)acrylates d'alkyle sont décrits dans KIRK-OTHMER, Encyclopedia of chemical technology, 4 ème édition dans le Vol 1 pages 292-293 et dans le Vol 16 pages 475-478. Le (meth)acrylate d'alkyle est avantageusement le méthacrylate de méthyle. Selon une autre forme avantageuse on utilise un mélange comprenant au moins 50% en poids de méthacrylate de méthyle, les autres monomères étant choisis parmi les monomères greffables en présence de méthacrylate de méthyle et de la polyoléfine. Ces autres monomères peuvent être un autre acrylate d'alkyle tel que l'acrylate de méthyle ou l'acrylate d'éthyle, l'acrylonitrile, un monomère vinylaromatique tel que le styrène ou un mélange d'au moins deux de ces monomères. De préférence la proportion de méthacrylate de méthyle est de 90 à 100% pour respectivement 0 à 10% des autres monomères.
**S'agissant du liant et maintenant de la polyoléfine,** on désigne ainsi un homo polymère ou copolymère d'alpha oléfines ou de dioléfines, telles que par exemple, éthylène, propylène, butène-1, octène-1, butadiène. A titre d'exemple, on peut citer :

- les homo polymères et copolymères du polyéthylène, en particulier LDPE, HDPE, LLDPE (linear low density polyéthylène ou polyéthylène basse densité linéaire), LDPE (low density polyéthylène), VLDPE (very low density polyéthylène, ou polyéthylène très basse densité) et le polyéthylène métallocène.
- les homopolymères ou copolymères du propylène.
- les copolymères éthylène/alpha-oléfine tels qu'éthylène/propylène, les EPR(abréviation d'éthylène-propylene-rubber) et éthylène/propylène/diène (EPDM).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle, la proportion de comonomère pouvant atteindre 40% en poids.

Avantageusement la polyoléfine est choisie parmi le VLDPE et les copolymères éthylène-(meth)acrylate d'alkyle.
S'agissant du VLDPE la densité peut être comprise entre 0,865 et 0,920 et le MFI (abréviation de Melt Flow

Index ou indice de fluidité à l'état fondu) entre 1 et 100 (en g/ 10min à 190°C sous une charge de 2,16kg) et de préférence entre 1 et 25. C'est par exemple un copolymère éthylène-octene ou éthylène-butène. On peut utiliser un mélange de plusieurs VLDPE.

S'agissant des copolymères éthylène-(meth)acrylate d'alkyle les alkyles peuvent avoir jusqu'à 24 atomes de carbone. Des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle. Le MFI (Melt Flow Index ou indice de fluidité à l'état fondu) de ces copolymères est avantageusement compris entre 0,3 et 100 g / 10 min (190°C - 2,16 kg). Avantageusement la teneur en (meth)acrylate est comprise entre 18 et 40 % en poids de (A) et de préférence entre 22 et 28%. Ces copolymères peuvent être fabriqués par polymérisation radicalaire en tube ou autoclave à des pressions comprises entre 1000 et 2500 bars. On peut utiliser un mélange de plusieurs de ces copolymères.

**Quant au liant et à sa préparation,** il suffit de mettre en contact le monomère et la polyoléfine en présence d'un initiateur le temps suffisant pour provoquer le greffage. On peut utiliser tout procédé par exemple la polyoléfine peut être dans un solvant ou sous forme de latex. Cependant il est beaucoup plus simple de mettre en contact le (meth) acrylate d'alkyle et la polyoléfine à l'état fondu dans tout dispositif de mélange ou de malaxage des thermoplastiques. On utilise avantageusement une extrudeuse dans laquelle on introduit dans la première zone les granulés de polyoléfine puis quelques zones plus loin le (meth)acrylate d'alkyle et l'initiateur radicalaire. le (meth)acrylate d'alkyle et l'initiateur radicalaire peuvent aussi être introduits séparément. Le polymère greffé est refroidi et récupéré sous forme de granulés pour une utilisation ultérieure ou bien utilisé de suite. Selon la nature du (meth)acrylate d'alkyle qu'on greffe sa température d'ébullition peut être beaucoup plus faible que la température de fusion de la polyoléfine ou la température à laquelle la polyoléfine est maintenue dans l'extrudeuse. Ainsi il est recommandé que la (ou les) vis ait des pas inverses dans certaines zones pour provoquer des bouchons de matière et obtenir un profil étanche maintenant ainsi le (meth)acrylate d'alkyle dans l'extrudeuse au contact de la polyoléfine. Ce principe est connu en lui même et a déjà été décrit dans l'art antérieur tel que US 4476283.

Quant aux proportions de (meth)acrylate d'alkyle et de polyoléfine qu'on met en présence, le rapport de la quantité de (meth)acrylate d'alkyle en poids sur la quantité de polyoléfine en poids (ou le rapport des débits si on opère en continu) peut être compris entre 0,1 et 10 et avantageusement entre 0,5 et 2.

La température de l'extrudeuse à l'intérieur des zones peut être comprise entre 110 et 200°C et avantageusement entre 120 et 150°C.

La proportion d'initiateur peut être de 0,005 à 10% en poids de la quantité de (meth)acrylate d'alkyle et éventuellement des autres monomères à greffer. De préférence cette proportion est comprise entre 0,5 et 3%. L'initiateur peut être quelconque pourvu qu'il provoque le greffage du (meth)acrylate d'alkyle. C'est par exemple les initiateurs qu'on utilise dans les polymérisations radicalaires. On utilise avantageusement les peroxydes.

La proportion de (meth)acrylate d'alkyle et des autres monomères éventuels greffés par rapport à l'ensemble du (meth)acrylate d'alkyle, des autres monomères éventuels et de la polyoléfine sur laquelle on a fait le greffage est avantageusement comprise entre 20 et 80% en poids. De préférence la proportion est entre 40 et 70%.

Le liant peut comprendre aussi, en plus du polymère greffé, au moins un produit choisi parmi les polymères fluorés (ils sont définis plus loin dans le texte), les polyoléfines, les polyoléfines fonctionnalisées, les polymères acryliques (PMMA), les modifiants choc acryliques de type core shell (coeur écorce) ou un mélange de ces produits. La polyoléfine fonctionnalisée peut être un polymère d'alpha oléfines ayant des motifs réactifs (les fonctionnalités) ; de tels motifs réactifs sont les fonctions acides, anhydrides, ou époxy. À titre d'exemple, on peut citer les polyoléfines précédentes greffées ou co- ou ter polymérisées par des époxydes insaturés tels que le (méth)acrylate de glycidyle, ou par des acides carboxyliques ou les sels ou esters correspondants tels que l'acide (méth)acrylique (celui-ci pouvant être neutralisé totalement ou partiellement par des métaux tels que Zn, etc.) ou encore par des anhydrides d'acides carboxyliques tels que l'anhydride maléique. Une polyoléfine fonctionnalisée est par exemple un mélange PE/EPR, dont le ratio en poids peut varier dans de larges mesures, par exemple entre 40/60 et 90/10, ledit mélange étant cogreffé avec un anhydride, notamment anhydride maléique, selon un taux de greffage par exemple de 0,01 à 5% en poids.

La polyoléfine fonctionnalisée peut être choisie parmi les (co)polymères suivants, greffés avec anhydride maléique ou méthacrylate de glycidyle, dans lesquels le taux de greffage est par exemple de 0,01 à 5% en poids :

- du PE, du PP, des copolymères de l'éthylène avec propylène, butène, hexène, ou octène contenant par exemple de 35 à 80% en poids d'éthylène ;
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- des copolymères éthylène et acétate de vinyle (EVA), contenant jusqu'à 40% en poids d'acétate de vinyle ;
- des copolymères éthylène et (méth)acrylate d'alkyle, contenant jusqu'à 40% en poids de (méth)acrylate d'alkyle ;

- des copolymères éthylène et acétate de vinyle (EVA) et (méth)acrylate d'alkyle, contenant jusqu'à 40% en poids de comonomères .

La polyoléfine fonctionnalisée peut être aussi choisie parmi les copolymères éthylène/propylène majoritaires en propylène greffés par de l'anhydride maléique puis condensés avec du polyamide (ou un oligomère de polyamide) mono aminé (produits décrits dans EP-A-0342066).

La polyoléfine fonctionnalisée peut aussi être un co- ou ter polymère d'au moins les motifs suivants : (1) éthylène, (2) (méth)acrylate d'alkyle ou ester vinylique d'acide carboxylique saturé et (3) anhydride tel que anhydride maléique ou acide (méth)acrylique ou époxy tel que (méth)acrylate de glycidyle.

A titre d'exemple de polyoléfines fonctionnalisées de ce dernier type, on peut citer les copolymères suivants, où l'éthylène représente de préférence au moins 60% en poids et où le ter monomère (la fonction) représente par exemple de 0,1 à 10% en poids du copolymère :

- les copolymères éthylène/(méth)acrylate d'alkyle / acide (méth)acrylique ou anhydride maléique ou méthacrylate de glycidyle;
- les copolymères éthylène/acétate de vinyle/anhydride maléique ou méthacrylate de glycidyle ;
- les copolymères éthylène/acétate de vinyle ou (méth)acrylate d'alkyle / acide (méth)acrylique ou anhydride maléique ou méthacrylate de glycidyle.

Dans les copolymères qui précèdent, l'acide (méth)acrylique peut être salifié avec Zn ou Li.

Avantageusement la proportion du polymère greffé par le (meth)acrylate d'alkyle représente au moins 30% en poids du liant.

**S'agissant de la couche de polymère directement attachée à la couche de liant** et tout d'abord des **polyoléfines** on a définit ces produits plus haut.

A titre d'exemple de **polymère acrylique** on peut citer les homopolymères d'un (méth)acrylate d'alkyle. Des (méth)acrylates d'alkyle sont décrits dans KIRK-OTHMER, Encyclopedia of chemical technology, 4 ème edition dans le Vol 1 pages 292-293 et dans le Vol 16 pages 475-478. On peut encore citer des copolymères d'au moins deux de ces (méth)acrylates et des copolymères d'au moins un (méth)acrylate avec au moins un monomère choisi parmi l'acrylonitrile, le butadiène, le styrène, l'isoprène pourvu que la proportion de (meth)acrylate soit d'au moins 50% en moles. l'invention est particulièrement utile pour le PMMA. Avantageusement le PMMA comprend 90 à 100% en poids de MMA pour respectivement 10 à 0% d'un autre acrylate. Cet autre acrylate peut être l'acrylate d'ethyle. Ces polymères acryliques sont soit constitués des monomères et éventuellement des comonomères cités plus haut et ne contiennent pas de modifiant choc soit ils contiennent en plus un modifiant choc acrylique. Les modifiants choc acryliques sont par exemple des copolymères statistiques ou sequencés d'au moins un monomère choisi parmi le styrène, le butadiène, l'isoprène et d'au moins un monomère choisi parmi l'acrylonitrile et les (meth)acrylate d'alkyle, ils peuvent être de type core-shell. Ces modifiants choc acryliques peuvent être mélangés avec le polymère acrylique une fois préparé ou être introduit au cours de sa polymérisation ou préparés simultanément au cours de sa polymérisation. Le MFI (melt flow index ou indice de fluidité à l'état fondu) de (A) peut être compris entre 2 et 15 g/10 min mesuré à 230°C sous une charge de 3,8 kg.

La quantité de modifiant choc acrylique peut être par exemple de 0 à 30 parties pour 100 à 70 parties du polymère acrylique et avantageusement de 5 à 20 parties pour 95 à 80 parties du polymère acrylique.

On ne sortirait pas du cadre de l'invention si le polymère acrylique était un mélange de deux ou plusieurs des polymères précédents.

A titre d'exemple de **polymère fluoré** on citera tout particulièrement

- les PVDF, homopolymères du fluorure de vinylidène (VF2) et les copolymères du fluorure de vinylidène (VF2) contenant de préférence au moins 50 % en poids de VF2 et au moins un autre monomère fluoré tel que le chlorotrifluoroéthylène (CTFE), l'hexafluoropropylène (HFP), le trifluoroéthylène (VF3), le tétrafluoroéthylène (TFE),
- les homo- et copolymères de trifluoroéthylène (VF3),
- les copolymères, et notamment terpolymères, associant les restes des motifs chlorotrifluoroéthylène (CTFE), tétrafluoroéthylène (TFE), hexafluoropropylène (HFP) et/ou éthylène et éventuellement des motifs VF2 et/ou VF3.

Parmi ces polymères fluorés on utilise avantageusement le PVDF.

Des structures particulièrement utiles comprennent dans cet ordre une couche de polyoléfine, une couche du liant et une couche de PVDF. Elles peuvent aussi comprendre une couche supplémentaire entre la couche de polyoléfine et la couche de liant, c'est par exemple une couche de la même structure mais rebroyée pour recycler des structures non conformes.

Elles peuvent se présenter sous la forme de tuyaux dont la couche intérieure est en PVDF, le diamètre extérieur compris entre 8 et 50 mm et l'épaisseur entre 0,8 et 10 mm. La couche de PVDF et la couche de liant peuvent représenter de 1 à 30% de l'épaisseur totale. Avantageusement dans ces tuyaux la polyoléfine est du polypropylène.

Selon une autre forme elles peuvent se présenter sous la forme d'un réservoir ou d'un conteneur dont la couche extérieure est en polyoléfine, le volume peut être compris entre 1 et 100 litres et l'épaisseur entre 1 et 25 mm. La couche de PVDF et la couche de liant peuvent représenter de 1 à 30% de l'épaisseur totale. Avantageusement dans ces conteneurs ou réservoirs la polyoléfine est du PEHD.

Selon une autre forme elles peuvent se présenter sous la forme d'un réservoir ou d'un conteneur dont la couche extérieure et la couche intérieure sont en polyoléfine et la couche centrale en PVDF, le volume peut être compris entre 1 et 100 litres et l'épaisseur entre 1 et 35 mm. La couche de PVDF et les couches de liant peuvent représenter de 1 à 30% de l'épaisseur totale. Avantageusement dans ces conteneurs ou réservoirs la polyoléfine est du PEHD.

[***Exemples***]

On a utilisé les produits suivants :

**Luperox 26®** : (2-ethylperhexanoate de tertiobutyle, MM = 216,3 g/mol, $t_{1/2}$ (1min) = 130,0 °C) :
**Engage® 8200** : VLDPE (copolymère éthylène octène) de caractéristiques

| **Densité g.cm$^{-3}$** | **Viscosité Mooney ML 1+4 à 121°C** | **MFI Dg.mi n$^{-1}$** | **% allongement à la rupture** | **T°f (DSC)** | **T°g (DSC)** | $\overline{Mn}$ **g.mol$^{-1}$** | $\overline{Mw}$ **g.mol$^{-1}$** |
|---|---|---|---|---|---|---|---|
| | | | | | | | |
| *0,870* | *8* | *5,0* | *> 1000%* | *64,9 °C* | *-59,4 °C* | *33 000* | *75 500* |

**Superflex 2500-20 :** copolymère VF2-HFP, MVI (Melt Volume Index ou indice de fluidité en volume à l'état fondu) 10 cm3/ 10 min à 230°C sous 5 kg).
**Kynar 720** ® : PVDF homopolymère de MVI 10 cm3 /10 min à 230°C sous 5 kg.
**PEHD 2040 ML 55 :** Polyéthylène haute densité de MFI 19,6 g / 10 min à 190°C sous 2,16 kg.
**OROGLAS® V 825T :** PMMA ne contenant pas de modifiant choc acrylique caractérisé par un MFI = 2,8 cm3/10 min ( 230°C 3,8 kg) et un choc Charpy à +23°C de 20 kJ / m2.
**OROGLAS® HF I7 :** PMMA contenant un modifiant choc acrylique caractérisé par un MFI = 10,3 cm3/10 min ( 230°C 3,8 kg) et un choc Charpy à +23°C de 45 kJ / m2.
**PP EP2C30F (aussi appelé RP210M) :** polypropylène vendu par la société BASELL de caracteristiques : MFI de 6 dg/min (230°C, 2,16 kg), densité de 0,9 g/cm3 et un module de flexion de 850 MPa.

On a greffé du méthacrylate de méthyle (MMA) sur un VLDPE (Engage® 8200) à l'aide d'une extrudeuse. L'extrudeuse utilisée pour ces essais est une BC 21 (Clextral® à bivis corotatives de diamètre 25 mm, d'entraxe 21 mm et de longueur de vis 8 à 36 D). Elle est constituée de 9 fourreaux chauffants indépendants accusant une puissance individuelle de 1 kW. La BC 21 est dotée d'un système de pilotage automatique avec possibilité d'enregistrement et de visualisation des données de travail. Les éléments de vis de 25 ou 50 mm de longueur sont juxtaposables sur des arbres cannelés. Le profil est expliqué sur la figure suivante :

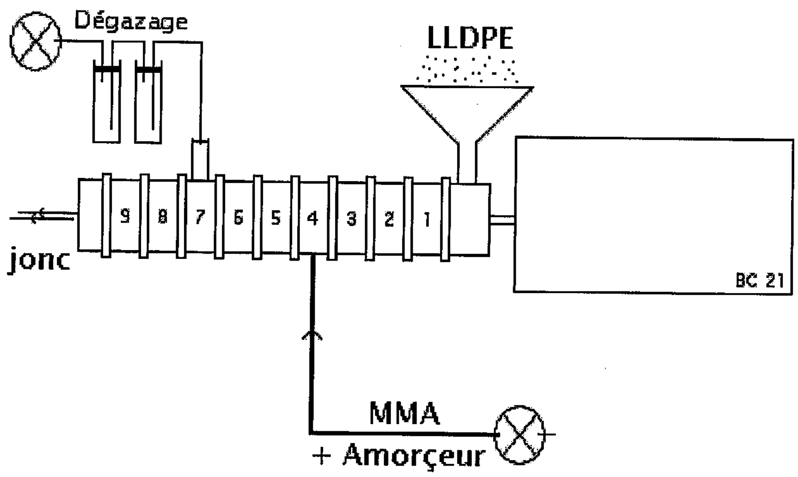


Il faut utiliser un procédé spécifique en ce qui concerne l'étanchéité : la mise en oeuvre du polyméthacrylate de méthyle se fait à des températures d'extrusion supérieures à au moins 170°C. La température d'ébullition du MMA étant de 100°C, une des principales difficultés de ce procédé était d'arriver à avoir un profil étanche. Grâce à des bouchons de matières créés par des éléments de pas inverse dans les sections 3 et 7, ceci a pu être obtenu. Dans cette zone, le MMA pouvait atteindre son équilibre liquide-vapeur à sa pression de vapeur saturante et rester liquide dans une atmosphère saturée en monomère. Des éléments malaxeurs ont été rajoutés, en section 3, pour faciliter la fusion du VLDPE, et dans les sections 5, 6 et 7 pour améliorer la diffusion dans ce milieu visqueux que constitue le mélange PE, PMMA et monomère. La zone de dégazage en section 7 permet d'éliminer le MMA résiduel. Des éléments de convoyage à grand pas de vis ont été placés dans cette zone afin d'optimiser le dégazage. La zone réactive se situe donc entre la section 4 et 7 de l'extrudeuse.

La section 1 est refroidie à 15°C pour améliorer l'alimentation de l'extrudeuse et éviter que le VLDPE devienne collant avant son entrée dans le fourreau. Les sections 2 et 3 sont chauffées à 135 °C afin de porter l'Engage® 8200 au delà de sa fusion. Les sections 4 à 7 sont les zones réactives de notre procédé. Les températures sont donc adaptées aux amorceurs et aux débits utilisés (le Luperox 26, qui a un temps de demi vie de 1 minute à 130°C, cette zone sera chauffé à 150°C). Les sections 8 à 10 doivent faciliter l'extrusion du PMMA formé, et sont ainsi portées à 200°C.

Les conversions sont de l'ordre de 80% (0,6 - 9,18 %, température constante de 150 à 160°C). Une série d'essais (tableau 1) a été réalisée et caractérisée par DSC, DMA, IR, mesure de traction et mesure de Fluage.

Tableau 1 :

| *essais réalisés avec le Luperox 26* | | | | | | |
|---|---|---|---|---|---|---|
| **Exemples** | **% amorceur dans MMA** | **Débit PE (kg. $h^{-1}$)** | **Débit Solution MMA (kg. $h^{-1}$)** | **% de Conv. en MMA*** | **% PMMA*** | **% MMA résiduel** |
| 1 | 1,98% | 1 | 1 | 69 % | 40 % | 2,82 % |
| 2 | 1,98% | 1 | 1,5 | 75 % | 53 % | 3,40 % |
| 3 | 1,98% | 1 | 2 | 73 % | 59 % | 3,64% |
| 4 | 5% | 1 | 1 | 80 % | 44 % | 1,48 % |
| 5 | 1,3% | 1 | 1 | < 70 % | < 40 % | 2,31 % |

* : déterminée à partir du Débit en filière

**Caractérisation :**

*Traction* :

Pour réaliser des tests de traction, des éprouvettes de 2×5×100 mm ont été réalisées par injection (presse à injecter avec température du fourreau de 225°C, et température du moule de 100°C).

*Fluage* :

Les mêmes éprouvettes réalisées pour la traction (2×5×100 mm) ont été utilisées pour faire des tests de fluage. Les tests ont été faits à 100°C avec un poids normalisé selon leur section à 1 bar (0,1 N/mm2) et les mesures de la déformation ont été faites au bout d'un quart d'heure.

*DMA* :

Les mesures DMA ont été faites sur des éprouvettes 4×10×100 injectées sur la presse à injecter (température fourreau : 225°C, température du moule : 100°C). La méthode de contrainte utilisée est la flexion 3 points, l'échantillon étant fixé à ses extrémités, et une flexion lui est imposée en son milieu à une fréquence de 1 rad/s de - 100°C à 130 °C

Afin de comparer les échantillons avec du PMMA et du VLDPE les exemples comparatifs Engage®8200 (exemple 6) et Oroglass® V 825 T (exemple 7) ont été aussi testés.

Tableau 2 :

| *Résultats des essais de traction* | | | | |
|---|---|---|---|---|
| **Exemples** | **$\sigma_{rupture}$ (MPa)** | **$\varepsilon_{rupture}$ (mm)** | **% allongement à la rupture** | **% de déformation[a)]** |
| 1 | 11,87 ± 0,22 | 58,58 ± 0,85 | 130 ± 1 % | - 1,1 % |
| 2 | 20,25 ± 0,58 | 2,26 ± 0,10 | 5,0 ± 0,2 % | - 5,3 % |
| 3 | 15,437 ± 0,75 | 9,7 ± 1,4 | 22 ± 3 % | - 1,7 |
| 4 | 5,67 ± 0,14 | 7,45 ± 0,49 | 17 ± 1 % | - 4,4 % |
| 5 | 13,00 ± 0,71 | 219,3 ± 7,4 | 487 ± 16 % | +10,9 % |
| 6 Engage 8200 7 | 7,259 | 473,893 | > 1050% 6 % * | + ∞ |
| Oroglass® V 825 | 70 * | - | | + 0,9 % |

a) Fluage à 100 °C, 1 bar, 15 min

Le VLDPE a un allongement tellement important que l'appareil n'a pas pu le mesurer, mais n'a pas une forte contrainte à la rupture. Le PMMA, au contraire, a une forte résistante à la contrainte, mais un allongement très faible. Les essais montrent un comportement intermédiaire entre ces deux bases, se rapprochant, suivant leur composition, plus de l'un que de l'autre. Les essais 1 et 5 semblent avoir une matrice VLDPE au vu de leur fort % d'allongement à la rupture. Les autres semblent avoir une matrice plutôt PMMA vu leur fragilité.

*DSC* :

Les échantillons passés en DSC ont été préalablement passés à l'étuve pour éliminer au maximum le MMA résiduel. La détermination de la température de transition vitreuse de l'Engage® 8200 (exemple 6) a posé quelques difficultés tant elle est de faible intensité.

Tableau 3 :

| *Résultats de la DSC* | | | | | | |
|---|---|---|---|---|---|---|
| **Essais** | **T°f LLDPE** | **T°g LLDPE** | **Energie de fusion (J/g)** | **T°g PMMA** | **% PMMA *** | **% PMMA**** |
| 1 | 61,4 | - 54,4 | 10,23 | 110,8 | **44 %** | 40 % |
| 2 | 61,7 | - 55,7 | 7,560 | 109,7 | **59 %** | 53 % |
| 3 | 60,6 | - 56,6 | 6,059 | 107,1 | **67%** | 59 % |
| 4 | 61,3 | - 48,7 | 9,368 | 102,2 | **49 %** | 44 % |
| 5 | 61,1 | - 53,3 | 11,79 | 115,4 | **35 %** | < 40 % |
| 6 | 64,9 | - 59,4 | 18,31 | - | **0 %** | 0 % |
| 7 | - | - | - | 108 *** | **100 %** | 100 % |

* : déterminé à partir de l'énergie de fusion, en considérant que la partie cristalline reste constante malgré le greffage

** : déterminé à partir des débits en filière

** : Température Vicat (50°C/h 50N)

*Mesure de DMA*

L'Engage® 8200 étant une polyoléfine de basse viscosité, il devient impossible de la soumettre a une contrainte au delà de 50°C.

Les mesures du module E' montrent que le module augmente avec le pourcentage de PMMA pour donner un matériau de module E' quasiment constant pour des teneurs en PMMA supérieures à 55%.

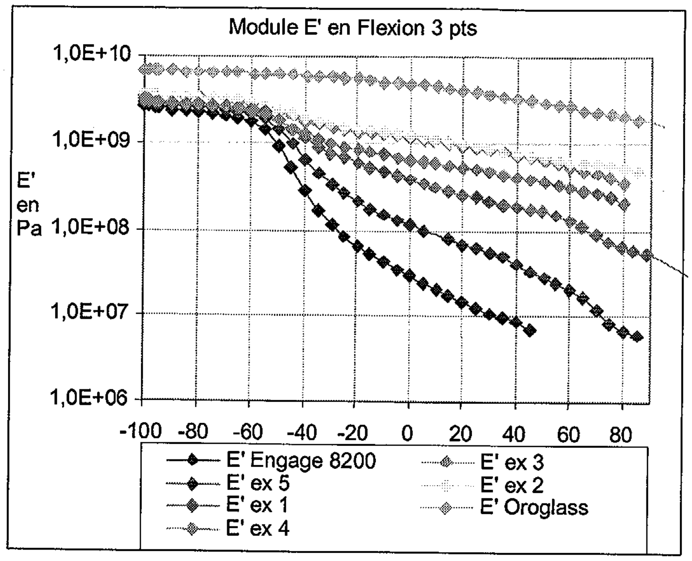


Figure 1 : Mesure de E' par DMA des échantillons

Les mesures de la tan δ des échantillons montrent une légère diminution de la température de transition vitreuse du LLDPE avec la teneur en PMMA.

Figure 2 : Mesure de la tan δ par DMA des échantillons

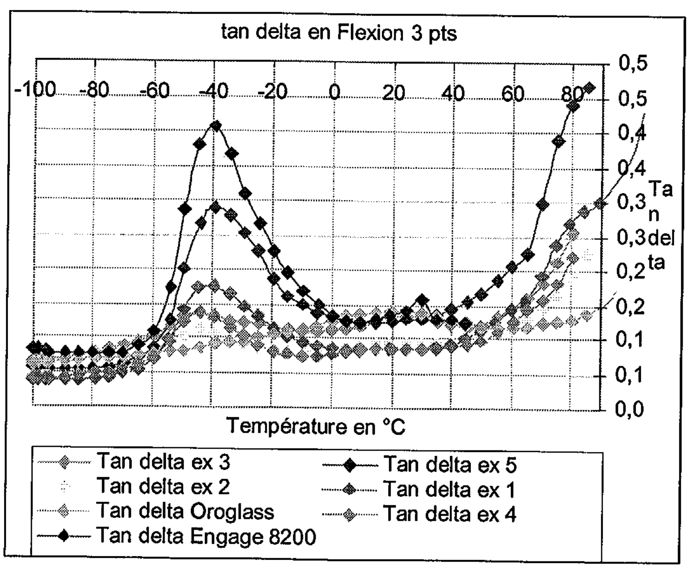


**Exemple 8 :** Collage du liant de l'exemple 2 avec le PEHD (2040ML55F)

Des «galettes» de 0.2 mm sont d'abord réalisées sous presse Darragon® à 220°C avec le PEHD 2040 ML 55F et le liant (exemple2) de la façon suivante :

- 2 minutes de préchauffe
- pressage 2 minute sous 50 bars
- refroidissement 1 minute sous 50 bars

Puis un complexe est réalisé en surperposant la galette du PEHD 2040 ML 55F et celle du liant. Ce complexe est ensuite maintenu 2 minutes sous presse à 220°C et 50 bars.
Il est impossible d'amorcer un décollement avec le PEHD 2040 ML 55F.

**Exemple 9** : Collage du liant de l'exemple 2 avec le PP (MONTELL EP2C30F)

Des «galettes» de 0.2 mm sont d'abord réalisées sous presse Darragon® à 220°C avec le Montell EP2C30F et le liant (exemple2) de la façon suivante :

- 2 minutes de préchauffe
- pressage 2 minutes sous 50 bars
- refroidissement 1 minute sous 50 bars

Puis un complexe est réalisé en surperposant la galette de l'EP2C30F et celle du liant. Ce complexe est ensuite maintenu 2 minutes sous presse à 280°C et 50 bars.
Il est impossible d'amorcer un décollement avec le PP Montell EP2C30F.

**Exemple 10** : Collage du liant de l'exemple 2 avec l'Engage 8200

Des «galettes» de 0.2 mm sont d'abord réalisées sous presse Darragon® à 220°C avec l'Engage 8200 et le liant (exemple2) de la façon suivante :

- 2 minutes de préchauffe
- pressage 1 minute sous 50 bars
- refroidissement 1 minute sous 50 bars

Puis un complexe est réalisé en surperposant la galette de l'Engage 8200 et celle du liant. Ce complexe est ensuite maintenu 1 minute sous presse à 220°C et 50 bars.
Il est impossible d'amorcer un décollement avec l'Engage 8200.

**Exemple 11 :** Collage du liant de l'exemple 2 avec PVDF (Kynar 720)

Des «galettes» de 0.2 mm sont d'abord réalisées sous presse Darragon® à 220°C avec le Kynar 720 et le liant (exemple2) de la façon suivante :

- 2 minutes de préchauffe
- pressage 1 minute sous 50 bars
- refroidissement 1 minute sous 50 bars

Puis un complexe est réalisé en surperposant la galette de le Kynar 720 et celle du liant. Ce complexe est ensuite maintenu 1 minute sous presse à 220°C et 50 bars.
Il est possible d'amorcer un décollement avec le Kynar 720.

**Example 12 :** Collage du liant de l'exemple 2 avec un PVDF copolymère (Kynarflex2500-20)

Des «galettes» de 0.2 mm sont d'abord réalisées sous presse Darragon® à 220°C avec le Kynar 2500-20 et le liant (exemple2) de la façon suivante :

- 2 minutes de préchauffe
- pressage 1 minute sous 50 bars
- refroidissement 1 minute sous 50 bars

Puis un complexe est réalisé en surperposant la galette de PVDF copo et celle du liant. Ce complexe est ensuite maintenu 1 minute sous presse à 220°C et 50 bars.

Il est impossible d'amorcer un décollement avec le PVDF.

**Example 13 :**Collage de l'exemple 2 avec le PMMA (HFI7)

Des «galettes» de 0.2 mm sont d'abord réalisées sous presse Darragon à 220°C avec le PMMA (HFI7) et le liant (exemple2) de la façon suivante :

- 2 minutes de préchauffe
- pressage 1 minute sous 50 bars
- refroidissement 1 minute sous 50 bars

Puis un complexe est réalisé en surperposant la galette du PMMA (HFI7) et celle du liant. Ce complexe est ensuite maintenu 1 minute sous presse à 220°C et 50 bars.
Il est impossible d'amorcer un décollement avec le PVDF.

**Exemple 14 :**collage de l'exemple 5 avec le PEHD (2040ML55F)

Des «galettes» de 0.2 mm sont d'abord réalisées sous presse Darragon à 220°C avec le PEHD 2040 ML 55F et le liant (exemples) de la façon suivante :

- 2 minutes de préchauffe
- pressage 2 minute sous 50 bars
- refroidissement 1 minute sous 50 bars

Puis un complexe est réalisé en surperposant la galette du PEHD 2040 ML 55F et celle du liant. Ce complexe est ensuite maintenu 2 minutes sous presse à 220°C et 50 bars.
Il est possible d'amorcer un décollement avec le PEHD 2040 ML 55F. Toutefois il y a une adhérence.

## Revendications

**1.** Structure multicouche comprenant :

- une couche de liant à base d'un polymère greffé résultant de la polymérisation d'au moins un (meth)acrylate d'alkyle en présence d'une polyoléfine et directement attachée à celle ci,
- une couche d'un polymère choisi parmi les polyoléfines, les polymères acryliques et les polymères fluorés.

**2.** Structure selon la revendication 1 comprenant dans cet ordre :

- une couche d'un polymère choisi parmi les polyoléfines, les polymères acryliques et les polymères fluorés,
- une couche du liant selon la revendication 1 et
- une couche d'un polymère choisi parmi les polyoléfines, les polymères acryliques et les polymères fluorés,
- les couches adhérant entre elles.

**3.** Structure selon la revendication 1 comprenant dans cet ordre :

- une couche d'un polymère choisi parmi les polyoléfines, les polymères acryliques et les polymères fluorés,
- une couche du liant selon la revendication 1,
- une couche d'un polymère choisi parmi les polyoléfines, les polymères acryliques et les polymères fluorés,
- une couche du liant selon la revendication 1,
- une couche d'un polymère choisi parmi les polyoléfines, les polymères acryliques et les polymères fluorés,
- les couches adhérant entre elles.

**4.** Structure selon l'une quelconque des revendications 1 à 3 dans laquelle le (meth)acrylate d'alkyle qu'on greffe sur la polyoléfine pour faire le liant est un mélange de monomères comprenant au moins 50% en poids de méthacrylate de méthyle, les autres monomères étant choisis parmi les monomères greffables en présence de méthacrylate de méthyle et de la polyoléfine.

5. Structure selon la revendication 4 dans laquelle la proportion de méthacrylate de méthyle en poids est de 90 à 100% pour respectivement 0 à 10% des autres monomères.

6. Structure selon l'une quelconque des revendications précédentes dans laquelle la polyoléfine sur laquelle on greffe le (meth)acrylate d'alkyle pour faire le liant est choisie parmi le VLDPE et les copolymères éthylène-(meth)acrylate d'alkyle.

7. Structure selon la revendication 7 dans laquelle la polyoléfine est un VLDPE dont la densité peut être comprise entre 0,865 et 0,920 et le MFI (abréviation de Melt Flow Index ou indice de fluidité à l'état fondu) entre 1 et 100 (en g/ 10min à 190°C sous une charge de 2,16kg).

8. Structure selon l'une quelconque des revendications précédentes dans laquelle le liant est tel que la proportion de (meth)acrylate d'alkyle et des autres monomères éventuels greffés par rapport à l'ensemble du (meth)acrylate d'alkyle, des autres monomères éventuels et de la polyoléfine sur laquelle on a fait le greffage est comprise entre 20 et 80% en poids.

9. Structure selon la revendication 8 dans laquelle cette proportion est entre 40 et 70%.

10. Structure selon l'une quelconque des revendications précédentes dans laquelle le liant peut comprendre aussi, en plus du polymère greffé, au moins un produit choisi parmi les polymères fluorés, les polyoléfines, les polyoléfines fonctionnalisées, les polymères acryliques (PMMA), les modifiants choc acryliques de type core shell (coeur écorce) ou un mélange de ces produits.

11. Dispositifs de transfert ou de stockage de fluides et plus particulièrement des tuyaux, des réservoirs, des goulottes, des bouteilles et des conteneurs constitués des structures selon l'une quelconque des revendications précédentes.

Office européen des brevets

# RAPPORT DE RECHERCHE EUROPEENNE

Numéro de la demande
EP 03 29 0756

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 1 122 060 A (ATOFINA) 8 août 2001 (2001-08-08) * page 11, ligne 19-35; revendications 1-4 * | 1,6,7,11 | C08F255/02 C09J151/06 B32B27/30 |
| X | US 6 087 001 A (LE ROY CHRISTOPHE ET AL) 11 juillet 2000 (2000-07-11) * revendication 1 * | 1 | |
| X | EP 0 427 388 A (ROHM & HAAS) 15 mai 1991 (1991-05-15) * exemple 4 * | 1 | |
| A | US 5 643 999 A (LEE I-HWA ET AL) 1 juillet 1997 (1997-07-01) * revendications 1,5 * | 1 | |
| A | US 5 180 788 A (VROOMANS HUBERTUS J) 19 janvier 1993 (1993-01-19) * colonne 2, ligne 35-57 * | 1,6 | |
| A | WO 97 22471 A (DOW CHEMICAL CO) 26 juin 1997 (1997-06-26) * revendication 1 * | 1 | DOMAINES TECHNIQUES RECHERCHES (Int.Cl.7) |
| A | EP 0 742 236 A (ATOCHEM ELF SA) 13 novembre 1996 (1996-11-13) * colonne 3, ligne 29-33 * | 1 | C08F C09J B32B |
| A | US 5 021 510 A (VROOMANS HUBERTUS J) 4 juin 1991 (1991-06-04) | | |

Le présent rapport a été établi pour toutes les revendications

| Lieu de la recherche | Date d'achèvement de la recherche | Examinateur |
|---|---|---|
| LA HAYE | 14 juillet 2003 | Meulemans, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 03 29 0756

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-07-2003

| Document brevet cité au rapport de recherche | | Date de publication | Membre(s) de la famille de brevet(s) | | Date de publication |
|---|---|---|---|---|---|
| EP 1122060 | A | 08-08-2001 | EP | 1122060 A1 | 08-08-2001 |
| | | | AU | 756134 B2 | 02-01-2003 |
| | | | AU | 1832001 A | 23-08-2001 |
| | | | CA | 2334448 A1 | 07-08-2001 |
| | | | CN | 1315250 A | 03-10-2001 |
| | | | EP | 1122061 A1 | 08-08-2001 |
| | | | JP | 2001277441 A | 09-10-2001 |
| | | | US | 2002051891 A1 | 02-05-2002 |
| US 6087001 | A | 11-07-2000 | AT | 241678 T | 15-06-2003 |
| | | | CA | 2209322 A1 | 27-12-1997 |
| | | | CN | 1172723 A | 11-02-1998 |
| | | | DE | 69722311 D1 | 03-07-2003 |
| | | | EP | 0816460 A1 | 07-01-1998 |
| | | | JP | 10067975 A | 10-03-1998 |
| | | | KR | 231365 B1 | 15-11-1999 |
| | | | US | 6294269 B1 | 25-09-2001 |
| EP 0427388 | A | 15-05-1991 | US | 5035933 A | 30-07-1991 |
| | | | AT | 113305 T | 15-11-1994 |
| | | | AU | 647046 B2 | 17-03-1994 |
| | | | AU | 6307890 A | 11-04-1991 |
| | | | BR | 9004825 A | 10-09-1991 |
| | | | CA | 2025399 A1 | 29-03-1991 |
| | | | DE | 69013638 D1 | 01-12-1994 |
| | | | DE | 69013638 T2 | 04-05-1995 |
| | | | EP | 0427388 A1 | 15-05-1991 |
| | | | JP | 3031563 B2 | 10-04-2000 |
| | | | JP | 3131639 A | 05-06-1991 |
| | | | MX | 169986 B | 03-08-1993 |
| | | | NZ | 235452 A | 26-03-1993 |
| | | | US | 5433984 A | 18-07-1995 |
| | | | US | 5300570 A | 05-04-1994 |
| US 5643999 | A | 01-07-1997 | AU | 5323696 A | 16-10-1996 |
| | | | CA | 2213863 A1 | 03-10-1996 |
| | | | DE | 69604793 D1 | 25-11-1999 |
| | | | DE | 69604793 T2 | 08-06-2000 |
| | | | EP | 0815179 A1 | 07-01-1998 |
| | | | WO | 9630455 A1 | 03-10-1996 |
| US 5180788 | A | 19-01-1993 | EP | 0286734 A1 | 19-10-1988 |
| | | | AT | 83250 T | 15-12-1992 |
| | | | CN | 88102228 A ,B | 02-11-1988 |
| | | | DE | 3783031 D1 | 21-01-1993 |
| | | | IN | 171050 A1 | 04-07-1992 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE RELATIF A LA DEMANDE DE BREVET EUROPEEN NO.** EP 03 29 0756

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-07-2003

| Document brevet cité au rapport de recherche | | Date de publication | Membre(s) de la famille de brevet(s) | | | Date de publication |
|---|---|---|---|---|---|---|
| US 5180788 | A | | JP | 64000110 | A | 05-01-1989 |
| | | | US | 5021510 | A | 04-06-1991 |
| WO 9722471 | A | 26-06-1997 | AT | 213460 | T | 15-03-2002 |
| | | | AU | 1338597 | A | 14-07-1997 |
| | | | BR | 9612069 | A | 17-02-1999 |
| | | | CA | 2237579 | A1 | 26-06-1997 |
| | | | CN | 1205669 | A ,B | 20-01-1999 |
| | | | DE | 69619401 | D1 | 28-03-2002 |
| | | | DE | 69619401 | T2 | 08-08-2002 |
| | | | EP | 0873242 | A1 | 28-10-1998 |
| | | | ES | 2168523 | T3 | 16-06-2002 |
| | | | JP | 2000502964 | T | 14-03-2000 |
| | | | NO | 982839 | A | 19-08-1998 |
| | | | RU | 2178437 | C2 | 20-01-2002 |
| | | | WO | 9722471 | A1 | 26-06-1997 |
| EP 0742236 | A | 13-11-1996 | CA | 2176070 | A1 | 10-11-1996 |
| | | | CN | 1285273 | A | 28-02-2001 |
| | | | CN | 1143102 | A ,B | 19-02-1997 |
| | | | DE | 69618272 | D1 | 07-02-2002 |
| | | | DE | 69618272 | T2 | 14-08-2002 |
| | | | EP | 0742236 | A1 | 13-11-1996 |
| | | | JP | 3113815 | B2 | 04-12-2000 |
| | | | JP | 8325425 | A | 10-12-1996 |
| | | | KR | 244056 | B1 | 01-02-2000 |
| | | | NO | 962102 | A | 03-12-1996 |
| US 5021510 | A | 04-06-1991 | EP | 0286734 | A1 | 19-10-1988 |
| | | | AT | 83250 | T | 15-12-1992 |
| | | | CN | 88102228 | A ,B | 02-11-1988 |
| | | | DE | 3783031 | D1 | 21-01-1993 |
| | | | IN | 171050 | A1 | 04-07-1992 |
| | | | JP | 64000110 | A | 05-01-1989 |
| | | | US | 5180788 | A | 19-01-1993 |

EPO FORM P0460

Pour tout renseignement concernant cette annexe : voir Journal Officiel de l'Office européen des brevets, No.12/82